(19) Europäisches Patentamt
European Patent Office
Office européen des brevets

(11) Publication number: 0 171 139 B1

(12) **EUROPEAN PATENT SPECIFICATION**

(45) Date of publication of patent specification: 26.07.89

(51) Int. Cl.$^4$: C 08 K 5/00, C 08 L 23/12 // (C08K5/00, 5:13, 5:37)

(21) Application number: 85303430.4

(22) Date of filing: 15.05.85

(54) **High polymer stabilizer containing a phenolic compound, and high polymers stabilized thereby.**

(30) Priority: 15.05.84 JP 98363/84

(43) Date of publication of application: 12.02.86 Bulletin 86/07

(45) Publication of the grant of the patent: 26.07.89 Bulletin 89/30

(84) Designated Contracting States: CH DE FR GB IT LI NL

(58) References cited:
EP-A-0 102 193
FR-A-2 268 782

(73) Proprietor: SUMITOMO CHEMICAL COMPANY, LIMITED
Kitahama 4-chome 5-33
Chuo-ku Osaka 541 (JP)

(72) Inventor: Sasaki, Manji
2-1 Kuwatacho
Ibaraki Osaka-fu (JP)
Inventor: Okamura, Haruki
3-4, Shigino-nishi
Joto-ku Osaka (JP)
Inventor: Ebina, Chinehito
4-9-17, Sakuragaoka
Minoo Osaka-fu (JP)
Inventor: Ishii, Tamaki
1-12-2, Uchihonmachi
Suita Osaka-fu (JP)
Inventor: Yachigo, Shinichi
2-11-7-305, Sone Higashimachi
Toyonaka Osaka-fu (JP)

(74) Representative: Geering, Keith Edwin et al
REDDIE & GROSE 16 Theobalds Road
London WC1X 8PL (GB)

EP 0 171 139 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a stabilizer for high polymers.

Various kinds of high polymer such as polyolefins (e.g. polyethylene, polypropylene), styrene type synthetic resins (e.g. polystyrene, impact-resistant polystyrene, ABS), engineering plastics (e.g. polyacetal, polyamide), polyurethane, etc. are widely used in various fields. It is however well known that when these high polymers are used alone their stability becomes a problem, for example they deteriorate by the action of heat, light and oxygen on processing or use, thereby showing a remarkable reduction in mechanical properties accompanied by phenomena such as softening, embrittlement, surface crack, discoloration and the like.

It is also hitherto well known that, in order to solve this problem, various phenolic type, phosphite type or sulfur-containing antioxidants are added or used in the course of production and processing of high polymers. For example, it is well known that phenolic type antioxidants such as 2,6 - di - tert - butyl - 4 - methylphenol, 2,2' - methylenebis(4 - methyl - 6 - tert - butylphenol), 4,4' - butylidenebis(3 - methyl - 6 - tert - butylphenol), n - octadecyl 3 - (3,5 - di - tert - butyl - 4 - hydroxyphenyl)propionate, 1,1,3 - tris(2 - methyl - 4 - hydroxy - 5 - tert - butylphenyl)butane, pentaerythritol tetrakis[3 - (3,5 - di - tert - butyl - 4 - hydroxyphenyl)propionate], the ester of terephthalic acid with 3 - (3,5 - di - tert - butyl - 4 - hydroxyphenyl)propanol and the like are used alone, or these phenolic type antioxidants are used in combination with phosphite type antioxidants such as tris(nonylphenyl)phosphite, distearyl pentaerythritol diphosphite and the like, or sulfur-containing antioxidants such as dilauryl thiodipropionate, dimyristyl thiodipropionate, distearyl thiodipropionate and the like.

These methods are not wholly satisfactory in terms of thermal and oxidation stability, thermal discoloration resistance, sublimation and the like.

A stabilizer comprising pentaerythritol tetrakis[3-(3,5-dialkyl-4-hydroxyphenyl)propionate] and pentaerythritol tetrakis(3-alkylthiopropionate) is proposed in Japanese Patent Application Kokai (Laid-open) No. 20337/1984. This stabilizer is better than the conventional ones, but it is not always wholly satisfactory in terms of the thermal and oxidation stability, thermal discoloration resistance, etc. so that there has been a demand for stabilizers of higher performance.

The present inventors extensively studied to solve these problems, and as a result, found that a mixture comprising particular phenolic type and particular sulfur-containing compounds can give high polymers excellent thermal and oxidation stability not predictable from the conventional antioxidant-combination techniques.

The present invention provides a stabilizer for high polymers containing as an effective component a mixture comprising at least one member selected from phenolic type compounds of formula (I),

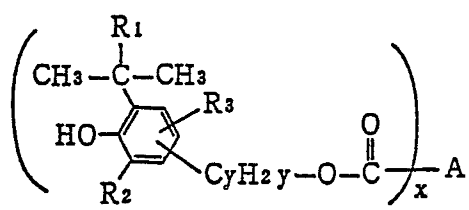

(I)

wherein $R_1$ represents a $C_1$—$C_9$ alkyl group, $R_2$ represents a $C_1$—$C_3$ alkyl group, $R_3$ represents a hydrogen atom or a methyl group, x represents an integer of 2 to 6, y represents an integer of 1 to 10, and A represents a di- to hexahydric carboxylic acid residue, but it may be simply a single bond when x is 2, and at least one member (II) selected from the group consisting of sulfur-containing compounds of formula (II-1),

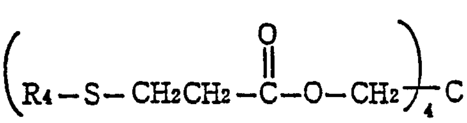

(II-1)

wherein $R_4$ represents a $C_4$—$C_{20}$ alkyl group, and those of formula (II-2),

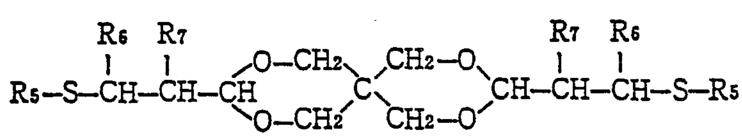

(II-2)

wherein $R_5$ represents a $C_3$—$C_{18}$ alkyl group, and $R_6$ and $R_7$ are selected independently from a hydrogen atom and $C_1$—$C_6$ alkyl groups, the weight ratio of phenolic type compound (I) to sulfur-containing compound (II) is e.g. 1 to 0.5—15.

Phenolic type compounds (I) of the present invention can be produced by the common esterification of hydroxyphenyl alkanol of formula (III),

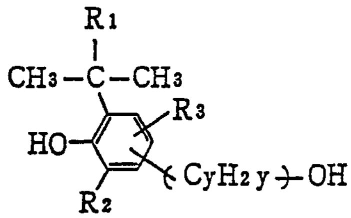

(III)

wherein $R_1$, $R_2$, $R_3$ and y have the same meanings as above, with polyhydric carboxylic acid of formula (IV),

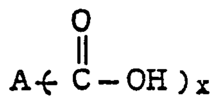

(IV)

wherein x and A have the same meanings as above, or its acid halide, acid anhydride, mixed acid anhydride or the like, or by the common ester interchange reaction of alkanol with lower alkyl ester of such acid.

Reference is made to the methods described in Japanese Patent Publication No. 38416/1970 and Japanese Patent Application Kokai (Laid-open) Nos. 7313/1972 and 134987/1975.

In a hydroxyphenyl alkanol of formula (III), substituent $R_1$ may be selected from methyl, ethyl, propyl, n- or tert-butyl, 2,2-dimethylpropyl, hexyl and 2,2,4,4-tetramethylpentyl groups, etc. Substituent $R_2$ may be selected from methyl, ethyl and isopropyl groups, etc. Substituent $-(C_yH_{2y})-$ may be selected from methylene, ethylene, trimethylene, tetramethylene, heptamethylene, 2,2-dimethyltrimethylene, hexamethylene, octamethylene, nonamethylene and decamethylene groups, etc.

Specific examples of hydroxyphenyl alkanols of formula (III) include the following:

4-Hydroxy-3-methyl-5-(1,1-dimethylpropyl)phenylmethanol
3-Hydroxy-2,6-dimethyl-4-(1,1,2,2-tetramethylpropyl)phenylmethanol
2-[4-Hydroxy-3-methyl-5-(1,1-dimethylbutyl)phenyl]ethanol
2-(3-Tert-butyl-4-hydroxy-5-ethylphenyl)ethanol
2-[4-Hydroxy-3-methyl-5-(1,1,3,3,5,5-hexamethylhexyl)phenyl]-1-methylethanol
3-(3-Tert-butyl-4-hydroxy-5-methylphenyl)propanol
3-(3-Tert-butyl-5-ethyl-4-hydroxyphenyl)propanol
3-(3-Tert-butyl-4-hydroxy-5-isopropylphenyl)propanol
3-[4-Hydroxy-3-methyl-5-(1,1,3,3-tetramethylbutyl)phenyl]propanol
3-(4-Tert-butyl-3-hydroxy-2,6-dimethylphenyl)propanol
3-(3-Tert-butyl-4-hydroxy-5-methylphenyl)-2,2-dimethylpropanol
4-[4-Hydroxy-3-methyl-5-(1,1-dimethylhexyl)phenyl]butanol
5-(3-Tert-butyl-5-ethyl-4-hydroxyphenyl)pentanol
6-[4-Hydroxy-3-isopropyl-5-(1,1,3,3,5,5-hexamethylhexyl)phenyl]hexanol.

As the di- to hexahydric carboxylic acid of formula (IV), suitable examples (a) to (e) are described below:

(a) Polyhydric carboxylic acids in which the carboxylic acid residue A is a $C_1$—$C_{18}$ acyclic aliphatic group.

Specific examples include malonic acid, maleic acid, succinic acid, glutaric acid, adipic acid, pimelic acid, suberic acid, azelaic acid, sebacic acid, tetradecane-1,14-dicarboxylic acid, octadecane-1,18-dicarboxylic acid, 6-ethyldodecane-1,12-dicarboxylic acid, 7-ethylhexadecane-1,16-dicarboxylic acid, butane-1,2,3,4-tetracarboxylic acid, tetradecane-1,6,7,8,9,14-hexacarboxylic acid and the like.

(b) Dihydric carboxylic acid in which A is simply a single bond. A specific example is oxalic acid.

(c) Polyhydric carboxylic acids in which the carboxylic acid residue A is a $C_5$—$C_{16}$ alicyclic group.

Specific examples include 1,2-cyclopentanedicarboxylic acid, 1,1-cyclopentanediacetic acid, 1,2-cyclohexanedicarboxylic acid, 1,4-cyclohexanedicarboxylic acid, 1,1-cyclohexanediacetic acid, 1,1-cyclotridecanediacetic acid, 5-norbornane-2,3-dicarboxylic acid, 1,2,4,5-cyclohexanetetracarboxylic acid and the like.

(d) Polyhydric carboxylic acids in which the carboxylic acid residue A is a $C_6$—$C_{10}$ aromatic group.

Specific examples include phthalic acid, isophthalic acid, terephthalic acid, 1,2,3-benzenetricarboxylic acid, 1,2,4-benzenetricarboxylic acid, 1,3,5-benzenetricarboxylic acid, 1,2,4,5-benzenetetracarboxylic acid, 1,4-naphthalenedicarboxylic acid, 1,8-naphthalenedicarboxylic acid, 1,4,5,8-naphthalenetetracarboxylic acid and the like.

(e) Polyhydric carboxylic acids in which the carboxylic acid residue A is an aliphatic group containing an aromatic group (as a side chain or in the main chain) and the number of carbon atoms in its aliphatic portion is 1 to 16.

Specific examples include phenylmalonic acid, o-phenylenediacetic acid, m-phenylenediacetic acid, p-phenylenediacetic acid, 7,8-diphenyltetradecane-1,14-dicarboxylic acid and the like.

The phenolic type compound of the present invention represented by the formula (I) is produced, as described above, by reacting a hydroxyphenyl alkanol represented by the formula (III) with a polyhydric carboxylic acid represented by the formula (IV) or its derivative. Specific examples of phenolic type compound I are shown in Table 1.

In the table,

a symbol 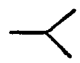 represents 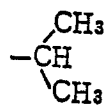 ,

a symbol 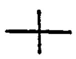 : 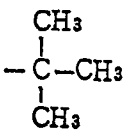 , a symbol 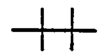 : 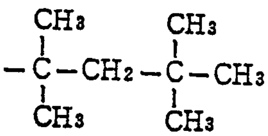 , and

a symbol 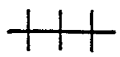 represents 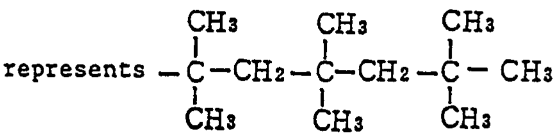 .

Table 1

No. 1

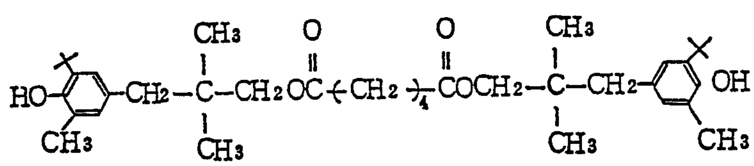

No. 2

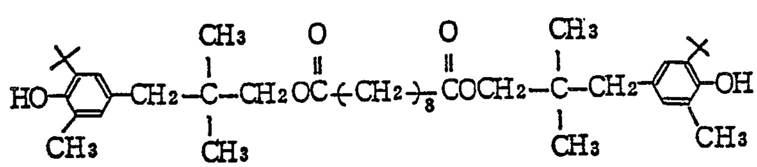

No. 3

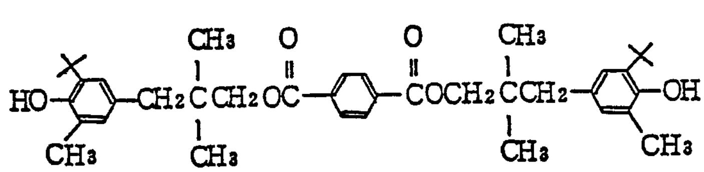

No. 4

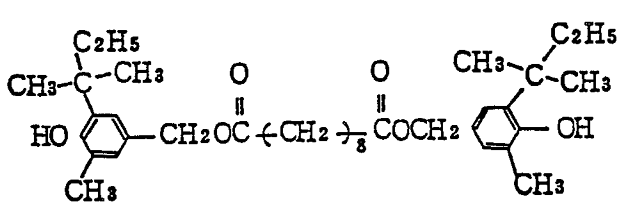

Table 1 (Cont'd)

No. 5

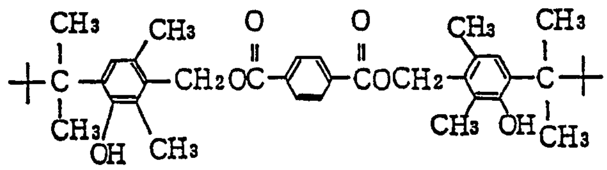

No. 6

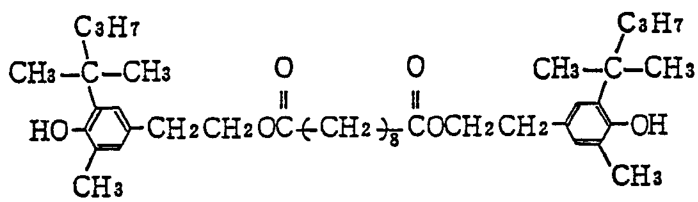

No. 7

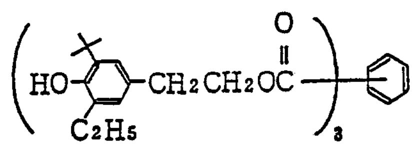

(Substituted at 1-, 3- and 5-positions of the benzene nucleus.)

No. 8

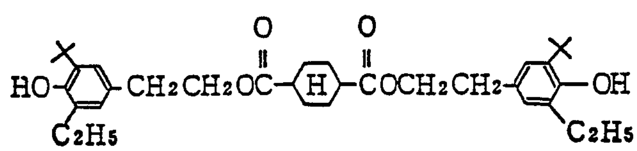

No. 9

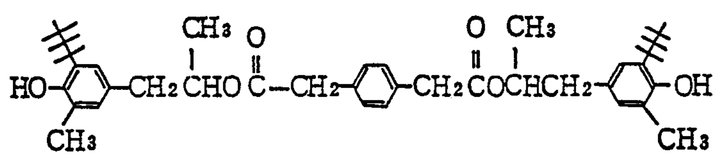

No. 10

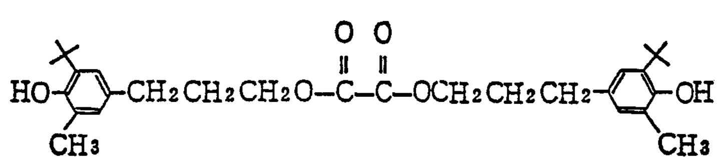

Table 1 (Cont'd)

No. 11

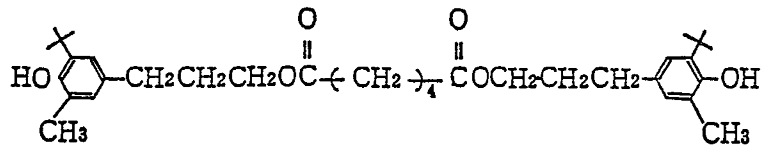

No. 12

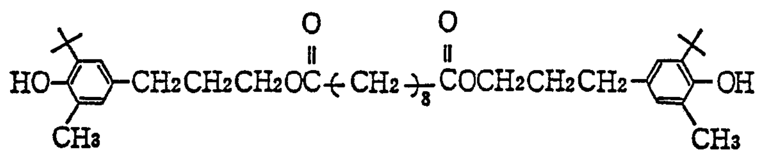

No. 13

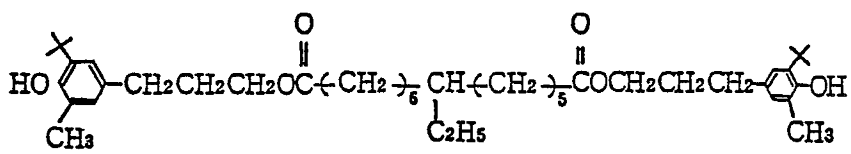

No. 14

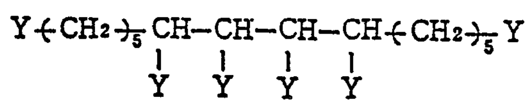

(In the formula, Y represents 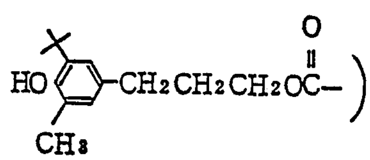 )

No. 15

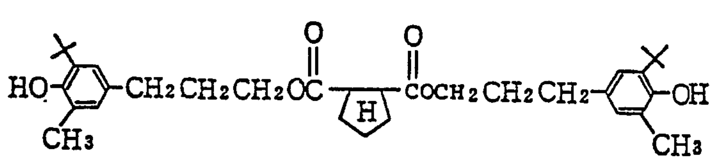

Table 1 (Cont'd)

No. 16

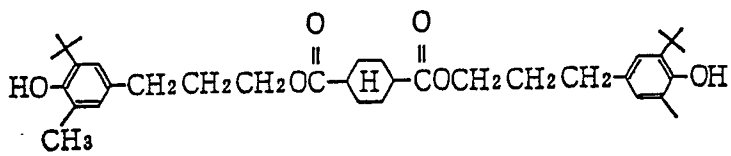

No. 17

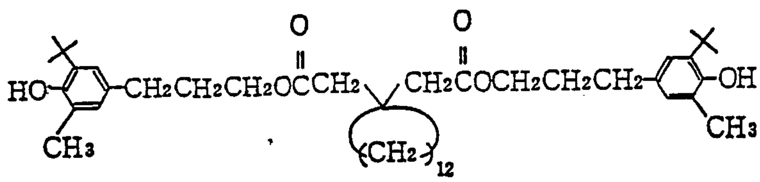

No. 18

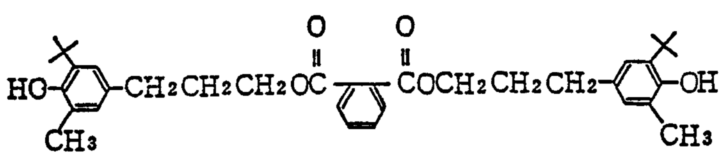

No. 19

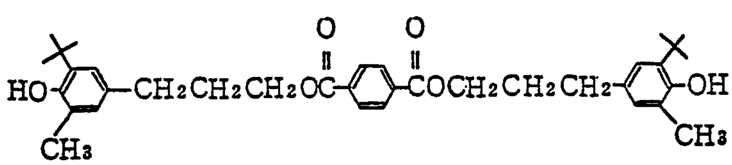

No. 20

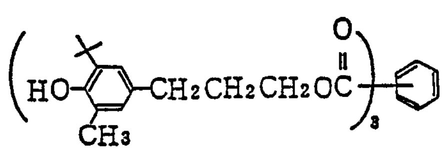

(Substituted at 1-, 2- and 3-positions of the benzene nucleus.)

No. 21

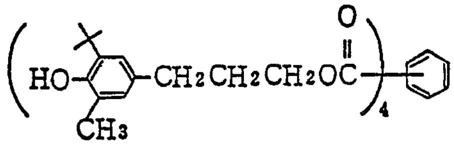

(Substituted at 1-, 2-, 4- and 5-positions of the benzene nucleus.)

Table 1 (Cont'd)

№ 22

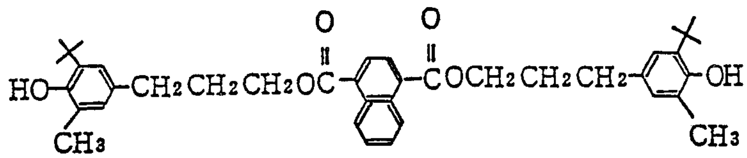

№ 23

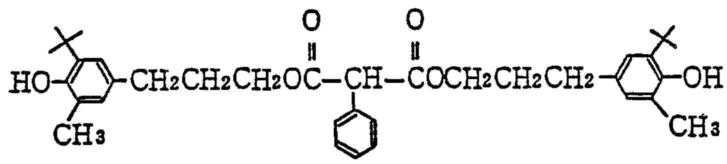

№ 24

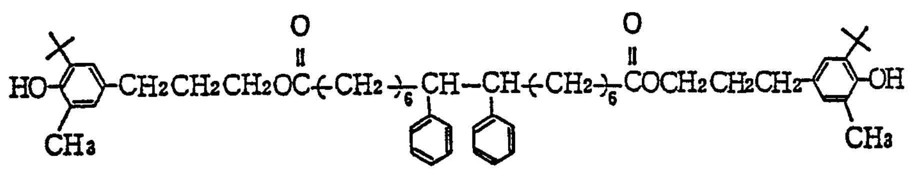

№ 25

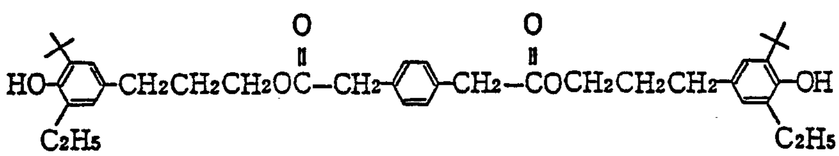

№ 26

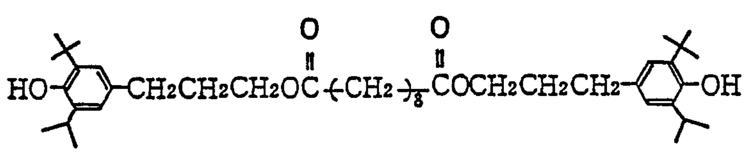

№ 27

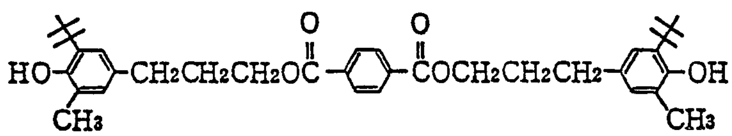

Table 1 (Cont'd)

No 28

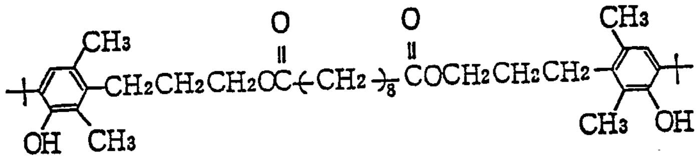

No 29

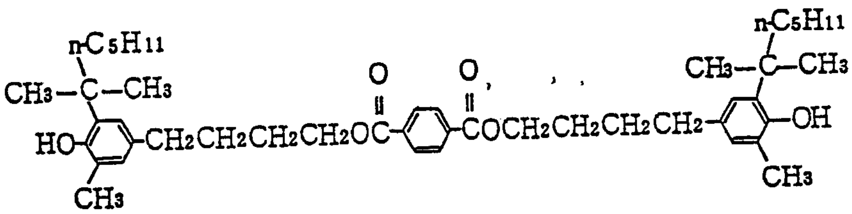

No 30

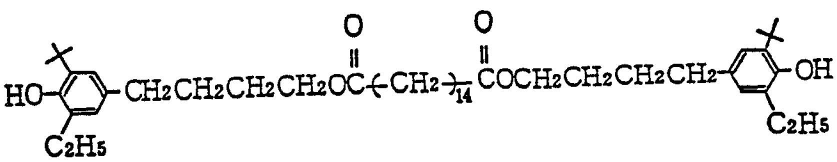

No 31

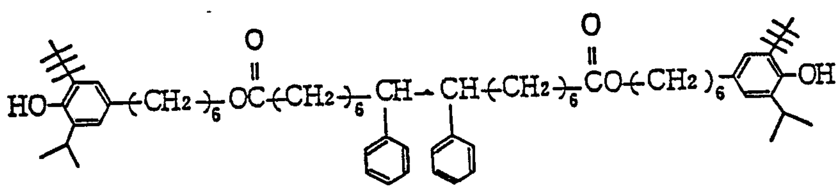

No 32

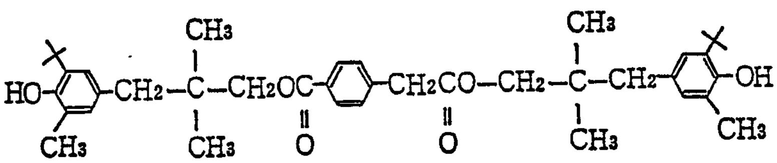

No 33

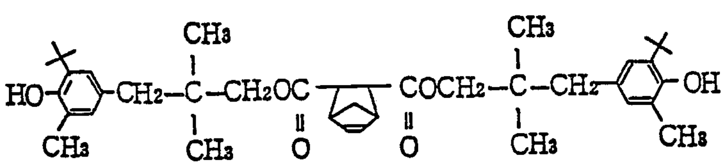

Table 1 (Cont'd)

No. 34

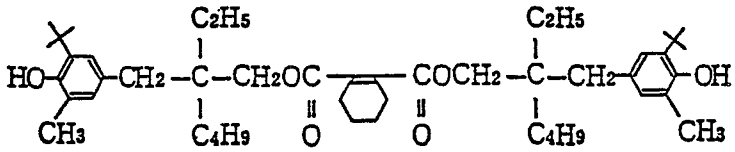

No. 35

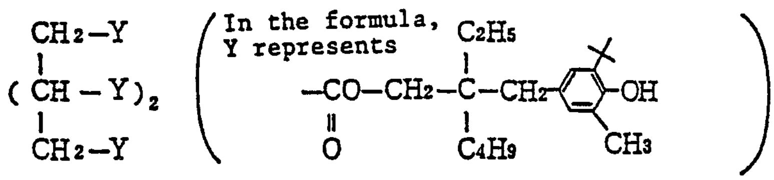

(In the formula, Y represents)

In sulfur-containing compound (II-1) substituent $R_4$ is preferably a $C_6$—$C_{18}$ alkyl group, most preferably a dodecyl group.

Typical examples of such compounds are shown in Table 2.

Table 2

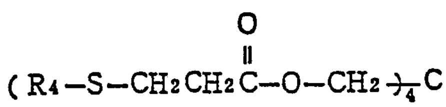

| Compound No. | $R_4$ |
|---|---|
| II − 1 − 1 | $-C_6H_{13}$ |
| II − 1 − 2 | $-C_{12}H_{25}$ |
| II − 1 − 3 | $-C_{18}H_{37}$ |

In compound (II-2) substituent $R_5$ is preferably a $C_8$—$C_{18}$ alkyl group, and substituents $R_6$ and $R_7$ are independently preferably a hydrogen atom or a $C_1$—$C_4$ alkyl group.

Typical examples of such compounds are shown in Table 3.

Table 3

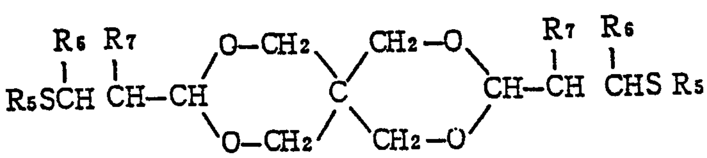

| Compound No. | $R_5$ | $R_6$ | $R_7$ |
|---|---|---|---|
| II − 2 − 1 | $-C_8H_{17}$ | $-CH_3$ | −H |
| II − 2 − 2 | $-C_{12}H_{25}$ | $-C_4H_9$ | −H |
| II − 2 − 3 | $-C_{12}H_{25}$ | $-CH_3$ | −H |
| II − 2 − 4 | $-C_{18}H_{37}$ | $-CH_3$ | −H |
| II − 2 − 5 | $-C_{12}H_{25}$ | −H | −H |
| II − 2 − 6 | $-C_{18}H_{37}$ | −H | $-CH_3$ |

The stabilizer of the present invention comprises, as described above, a mixture of phenolic type compound (I) and at least one member selected from the group consisting of sulfur-containing compounds (II-1) and (II-2); the mixing ratio of (I) to (II) is e.g. 1 to 0.5—15, preferably 1 to 1—10, more preferably 1 to 2—6 in weight ratio.

When the weight ratio of sulfur-containing compound (II) to phenolic type (I) is less than 0.5, the intended effect is difficult to obtain. If the weight ratio exceeds 15, a correspondingly increased effect is difficult to obtain, and such a ratio may be disadvantageous economically.

In using the stabilizer of the present invention, the amount of the stabilizer blended with high polymers is generally 0.01 to 5 parts by weight, preferably 0.05 to 1 part by weight based on 100 parts by weight of the high polymer. In using the stabilizer, phenolic type (I) and sulfur-containing (II) compounds may separately be blended with the high polymer without mixing the compounds in advance.

For blending the stabilizer with high polymers, the well-known apparatus and methods for incorporating stabilizers, pigments, fillers, etc. in high polymers may be used.

In using the stabilizer of the present invention, other additives such as ultraviolet absorbers, light stabilizers, antioxidants, metal deactivators, metal soaps, nucleating agents, lubricants, antistatic agents, flame retardants, pigments, fillers and the like may be used together with said stabilizer.

Particularly, the light fastness of high polymers can be improved by using a light stabilizer together with the stabilizer of the present invention. Light stabilizers include for example benzophenone compounds such as 2 - hydroxy - 4 - methoxybenzophenone, 2 - hydroxy - 4 - n - octoxybenzophenone, 2,2' - dihydroxy - 4,4' - dimethoxybenzophenone, etc.; benzotriazole compounds such as 2 - (2 - hydroxy - 5 - methylphenyl)benzotriazole, 2 - (2 - hydroxy - 3 - tert - butyl - 5 - methylphenyl) - 5 - chlorobenzotriazole, 2 - (2 - hydroxy - 3,5 - di - tert - butylphenyl)benzotriazole, 2 - (2 - hydroxy - 3,5 - di - tert - butylphenyl) - 5 - chlorobenzotriazole, 2 - (2 - hydroxy - 3,5 - di - tert - amylphenyl)benzotriazole, 2 - (2 - hydroxy - 5 - tert - octylphenyl)benzotriazole, 2 - [2 - hydroxy - 3,5 - bis(α,α - dimethylbenzyl)-phenyl]benzotriazole, etc.; benzoate compounds such as phenyl salicylate, p-tert-butylphenyl salicylate, 2,4 - di - tert - butylphenyl 3,5 - di - tert - butyl - 4 - hydroxybenzoate, hexadecyl 3,5 - di - tert - butyl - 4 - hydroxybenzoate, etc.; nickel compounds such as Ni salt of N,N - dibutyldithiocarbamic acid, [2,2' - thiobis(4 - tert - octylphenolate)] - butylamine nickel complex, Ni salt of (3,5 - di - tert - butyl - 4 - hydroxybenzyl)phosphonic acid monoethyl ester, etc.; hindered piperidine compounds such as 2,2,6,6 - tetramethyl - 4 - piperidyl benzoate, bis(2,2,6,6 - tetramethyl - 4 - piperidyl) sebacate, bis(2,2,6,6 - tetramethyl - 4 - piperidyl) 2 - (3,5 - di - tert - butyl - 4 - hydroxybenzyl) - 2 - n - butylmalonate, 1 - [2 - {3 - (3,5 - di - tert - butyl - 4 - hydroxyphenyl)propionyloxy}ethyl] - 4 - [3 - (3,5 - di - tert - butyl - 4 - hydroxyphenyl)propionyloxy] - 2,2,6,6 - tetramethylpiperidine, a polycondensation product of dimethyl succinate with 1 - (2 - hydroxyethyl) - 4 - hydroxy - 2,2,6,6 - tetramethylpiperidine, a reaction product of dihaloalkylene with N,N' - bis(2,2,6,6 - tetramethylpiperidyl)alkylenediamine, a reaction product of a 2,6 - dichloro - 1,3,5 - triazine with N,N' - bis(2,2,6,6 - tetramethylpiperidyl) - alkylenediamine, etc.; acrylonitrile compounds such as ethyl α - cyano - β,β - diphenylacrylate, methyl α - cyano - β - methyl - β - (p - methoxyphenyl)acrylate, etc.; and oxamide compounds such as N - 2 - ethylphenyl - N' - 2 - ethoxy - 5 - tert - butylphenyloxamide, N - 2 - ethylphenyl - N' - 2 - ethoxyphenyloxamide, etc.

Also, the color of high polymers can be improved by adding a phosphite type antioxidant. Antioxidants include for example tris(nonylphenyl)phosphite, distearyl pentaerythritol diphosphite, tris(2,4-di-tert-butylphenyl)phosphite, tris(2-tert-butyl-4-methylphenyl)phosphite, bis(2,4-di-tert-butylphenyl) pentaerythritol diphosphate, tetrakis(2,4-di-tert-butylphenyl) 4,4'-biphenylene diphosphite and the like.

By using the stabilizer of the present invention, the stability of high polymers can be improved. As such high polymers, there are given for example low-density polyethylene, high-density polyethylene, linear low-density polyethylene, chlorinated polyethylene, EVA resin, polypropylene, polyvinyl chloride, methacrylic resin, polystyrene, impact-resistant polystyrene, ABS resin, AES resin, MBS resin, polyethylene terephthalate, polybutylene terephthalate, polyamide, polyimide, polycarbonate, polyacetal, polyurethane, unsaturated polyester resin and the like. Further, said high polymers may be rubbers such as natural rubber, isoprene rubber, butadiene rubber, acrylonitrile/butadiene copolymeric rubber, styrene/butadiene copolymeric rubber, etc. and blends of these polymers. Particularly, the stabilizer of the present invention is effective on polypropylene.

Next, the present invention will be illustrated in detail with reference to the following examples, but it is not to be interpreted as being limited to these examples.

Of the compounds described in the examples, AO-1 to AO-9 (not according to the invention) are described in Table 4, the other compounds are described in Tables 1 to 3.

Table 4

| Compound | Structure |
|---|---|
| AO-1 | 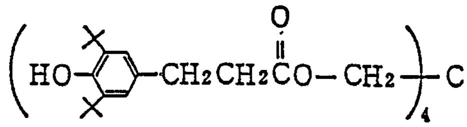 |
| AO-2 | 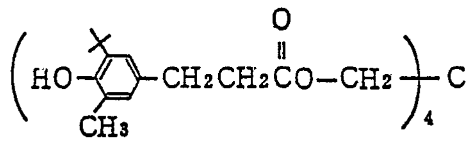 |
| AO-3 | 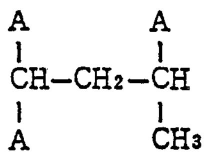 A = 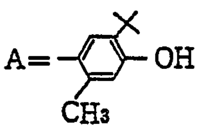 |
| AO-4 | 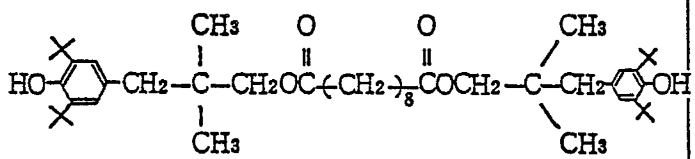 |
| AO-5 | 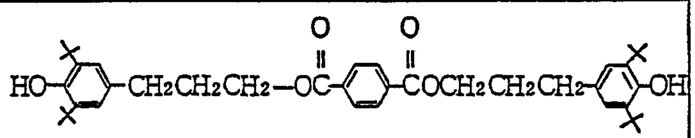 |
| AO-6 | 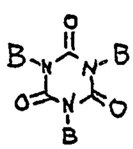 B = 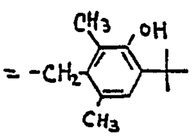 |

Table 4 (Cont'd.)

| Compound | Structure |
|---|---|
| AO-7 | 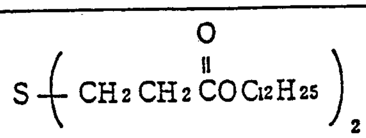 |
| AO-8 | 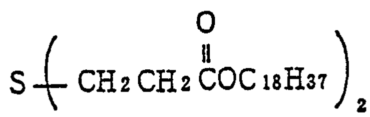 |
| AO-9 | 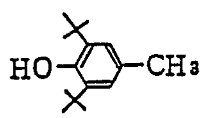 |

Production of the compound No. 1

0.54 Grams (0.010 mole) of sodium methoxide was added to a mixture comprising 19.62 g (0.078 mole) of 3-(3-tert-butyl-4-hydroxy-5-methylphenyl)-2,2-dimethylpropanol, 5.75 g (0.033 mole) of dimethyl adipate and 20 ml of dimethylformamide, and after raising the temperature to 140°C with stirring, reaction was carried out for 2 hours. Thereafter, the solvent was removed by distillation while reducing the pressure gradually to complete reaction.

The reaction mixture obtained was diluted with toluene, and after neutralizing and washing with water, the solvent was removed by evaporation. The residue was recrystallized from a n-hexane/ethyl acetate mixed solvent to obtain 11.2 g of bis[3-(3-tert-butyl-4-hydroxy-5-methylphenyl)-2,2-dimethylpropyl] adipate as white crystals.

m.p., 111—112°C.

Mass analytical value (FD-mass): 611 $(M+1)^+$.

Proton NMR ($CDCl_3$/TMS): δ (ppm) 0.90 (s, 12H), 1.39 (s, 18H), 1.7 (m, 4H), 2.21 (s, 6H), 2.4 (m, 4H), 2.47 (s, 4H), 3.76 (s, 4H), 4.58 (s, 2H), 6.76 (s, 2H), 6.87 (s, 2H).

Production of the compound No. 2

The reaction was carried out in the same manner as above except that 7.60 g (0.033 mole) of dimethyl sebacate was used in place of dimethyl adipate, to obtain 13.2 g of bis[3-(3-tert-butyl-4-hydroxy-5-methylphenyl)-2,2-dimethylpropyl] sebacate as white crystals.

m.p., 95—96°C.

Mass analytical value (FD-mass): 667 $(M+1)^+$.

Proton NMR ($CDCl_3$/TMS): δ (ppm) 0.89 (s, 12H), 1.39 (s, 18H), 1.5 (m, 12H), 2.20 (s, 6H), 2.4 (m, 4H), 2.47 (s, 4H), 3.75 (s, 4H), 4.64 (s, 2H), 6.74 (s, 2H), 6.86 (s, 2H).

Production of the compound No. 3

The reaction was carried out in the same manner as for compound No. 1 except that 6.41 g (0.033 mole) of dimethyl terephthalate was used in place of dimethyl adipate. The reaction mixture obtained was diluted with chloroform, and after neutralization and washing with water, the solvent was removed by evaporation. The residue was recrystallized to obtain 7.3 g of bis[3-(3-tert-butyl-4-hydroxy-5-methylphenyl)-2,2-dimethylpropyl] terephthalate as white crystals.

m.p., 192—193°C.

Mass analytical value (FD-mass): 631 $(M+1)^+$.

Proton NMR ($CDCl_3$/TMS): δ (ppm) 0.99 (s, 12H), 1.34 (s, 18H), 2.16 (s, 6H), 2.58 (s, 4H), 4.00 (s, 4H), 4.58 (s, 2H), 6.74 (s, 2H), 6.87 (s, 2H), 8.08 (s, 4H).

Procedure 1

The following components were mixed on a mixer for 5 minutes and then melt-kneaded at 180°C on a mixing roll to obtain a blend. This blend was formed into a sheet 0.5 mm thick on a hot press kept at 210°C to prepare a test piece of 40 × 40 × 0.5 mm in size. This test piece was placed in a Geer oven kept at 155°C

and the time required for 30% of its area to become brittle was measured and this was taken as the thermal embrittlement induction period to evaluate the thermal and oxidation stability.

Blend:

| | | Part by weight |
|---|---|---|
| Unstabilized polypropylene resin | | 100 |
| Calcium stearate | | 0.1 |
| 2,6-Di-tert-butyl-4-methylphenol | | 0.2 |
| Examples 1—52 | Phenolic type compound | 0.05 |
| | Sulfur-containing compound | 0.15 |

Also, a test piece prepared in the same manner as above was tested for thermal discoloration in a Geer oven kept at 155°C. The thermal discoloration was evaluated by the color difference, ΔYI, between the test piece above and the stabilizer-free test piece (Example 53) before thermal ageing. The results are shown in Table 5.

Table 5

| Example | No. | Phenolic type compound | Sulfur-containing compound | Thermal embrittlement induction period(hr) | Thermal discoloration ΔYI | | |
|---|---|---|---|---|---|---|---|
| | | | | | 0 (hr) | 48 (hr) | 336 (hr) |
| Examples of the Invention | 1 | No.1 | II-1-2 | 1200 | -1.9 | -13.7 | -8.0 |
| | 2 | " | II-2-4 | 1190 | -1.8 | -13.5 | -7.8 |
| | 3 | " | II-2-5 | 1150 | -1.7 | -13.1 | -7.6 |
| | 4 | No.2 | II-1-1 | 1060 | -1.7 | -13.2 | -7.6 |
| | 5 | " | II-1-2 | 1220 | -2.0 | -13.8 | -7.9 |
| | 6 | " | II-1-3 | 1070 | -1.7 | -13.1 | -7.5 |
| | 7 | " | II-2-1 | 1060 | -1.6 | -13.0 | -7.5 |
| | 8 | " | II-2-2 | 1080 | -1.7 | -13.1 | -7.6 |
| | 9 | " | II-2-3 | 1160 | -1.9 | -13.2 | -7.6 |
| | 10 | " | II-2-4 | 1210 | -2.0 | -13.2 | -7.7 |
| | 11 | " | II-2-5 | 1160 | -1.8 | -13.0 | -7.5 |
| | 12 | " | II-2-6 | 1200 | -1.8 | -13.0 | -7.5 |
| | 13 | No.3 | II-1-2 | 1210 | -2.0 | -13.5 | -7.6 |
| | 14 | " | II-2-4 | 1200 | -1.9 | -13.4 | -7.5 |
| | 15 | " | II-2-5 | 1160 | -1.7 | -13.3 | -7.4 |
| | I6 | No.8 | II-1-2 | 1200 | -1.8 | -13.3 | -7.4 |
| | 17 | " | II-2-4 | 1190 | -1.8 | -13.4 | -7.5 |
| | 18 | " | II-2-5 | 1130 | -1.7 | -13.2 | -7.3 |
| | 19 | No.9 | II-1-2 | 1200 | -1.9 | -13.2 | -7.4 |
| | 20 | " | II-2-5 | 1140 | -1.7 | -13.0 | -7.2 |
| | 21 | No.10 | II-1-2 | 1200 | -1.8 | -13.3 | -7.4 |
| | 22 | " | II-2-5 | 1150 | -1.7 | -13.1 | -7.1 |
| | 23 | No.12 | II-1-2 | 1220 | -2.0 | -13.3 | -7.5 |
| | 24 | " | II-2-4 | 1210 | -2.0 | -13.5 | -7.7 |
| | 25 | No.19 | II-1-2 | 1190 | -1.8 | -13.2 | -7.2 |

Cont'd.

Table 5 (Cont'd.)

| Example | No. | Phenolic type compound | Sulfur-containing compound | Thermal embrittlement induction period(hr) | Thermal discoloration ΔYI | | |
|---|---|---|---|---|---|---|---|
| | | | | | 0 (hr) | 48 (hr) | 336 (hr) |
| Examples of the Invention | 26 | No.24 | II-1 2 | 1200 | -1.9 | -13.3 | -7.3 |
| | 27 | " | II-2-4 | 1170 | -1.7 | -13.0 | -7.0 |
| | 28 | " | II-2-5 | 1140 | -1.6 | -13.0 | -7.1 |
| | 29 | No.26 | II-1-2 | 1200 | -1.8 | -13.1 | -7.2 |
| | 30 | " | II-2-4 | 1190 | -1.7 | -13.3 | -7.5 |
| Comparative examples | 31 | No.1 | AO-7 | 250 | -1.1 | - 7.0 | – |
| | 32 | " | AO-8 | 400 | -1.2 | - 7.1 | 8.7 |
| | 33 | No.2 | AO-7 | 260 | -1.6 | - 7.7 | – |
| | 34 | No.3 | AO-8 | 430 | -1.6 | - 7.6 | 7.0 |
| | 35 | No.8 | " | 365 | -1.3 | - 7.3 | 10.1 |
| | 36 | No.24 | " | 400 | -1.5 | - 7.5 | 8.9 |
| | 37 | AO-1 | " | 420 | -1.4 | - 7.4 | 7.1 |
| | 38 | AO-2 | " | 350 | -1.5 | - 7.6 | 10.5 |
| | 39 | AO-3 | " | 280 | -1.3 | - 7.3 | – |
| | 40 | AO-4 | " | 400 | -1.2 | - 7.2 | 7.2 |
| | 41 | AO-5 | " | 400 | -1.1 | - 7.0 | 7.3 |
| | 42 | AO-6 | " | 360 | 0.5 | - 4.5 | 12.3 |
| | 43 | AO-1 | II-1-2 | 230 | -1.5 | - 7.3 | – |
| | 44 | " | II-2-4 | 250 | -1.5 | - 7.2 | – |
| | 45 | AO-2 | II-1-2 | 890 | -1.6 | -10.1 | -1.6 |
| | 46 | " | II-2-5 | 860 | -1.6 | - 9.5 | -1.5 |
| | 47 | AO-3 | II-1-2 | 290 | -1.2 | - 7.0 | – |
| | 48 | AO-4 | II-2-5 | 220 | -1.3 | - 7.0 | – |

Cont'd.

Table 5 (Cont'd.)

| Example | No. | Phenolic type compound | Sulfur-containing compound | Thermal embrittlement induction period(hr) | Thermal discoloration ΔYI | | |
|---|---|---|---|---|---|---|---|
| | | | | | 0 (hr) | 48 (hr) | 336 (hr) |
| Comparative examples | 49 | AO-5 | II-2-4 | 230 | -1.3 | - 7.1 | – |
| | 50 | " | II-2-5 | 230 | -1.2 | - 6.9 | – |
| | 51 | AO-6 | II-1-2 | 830 | 0.3 | - 4.7 | 3.2 |
| | 52 | " | II-2-5 | 810 | 0.8 | - 4.1 | 3.5 |
| | 53 | No addition | | 5> | 0.0 | – | – |

Procedure 2

The Example compounds in Table 6 were bead-peptized together with an anionic surface active agent to prepare a suspension, and a prescribed amount, as shown in Table 6, of the suspension was added to a graft ABS latex (said amount is expressed by the weight of the test compound per 100 parts by weight of the resinous solid matter of the latex). Thereafter, the mixture was as usual salted out with an aqueous magnesium sulfate solution, filtered, washed with water and dried to obtain an ABS resin powder. This ABS resin powder was formed into pellets by extrusion at 220°C, and pellets were injection-molded at 250°C to prepare the test piece No. 1 specified by JIS K 7111. This test piece was thermally aged for 10 hours in a Geer oven kept at 150°C, and the degree of discoloration of the ABS resin test piece was expressed by the color difference, ΔYI, between said ABS test piece and the stabilizer-free, thermally unaged ABS test piece (Example 34). Further, the Charpy impact test was carried out on this test piece. The results are shown in Table 6.

Table 6

| Example No. | | Examples of the Invention | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Phenolic type compound | No.2 (Table 1) | 0.5 | 0.5 | 0.5 | | | | | | | | | | |
| | No.3 ( " ) | | | | 0.5 | 0.5 | 0.5 | 0.5 | 0.5 | 0.5 | | | | |
| | No.10( " ) | | | | | | | | | | 0.5 | 0.5 | 0.5 | |
| | No.12( " ) | | | | | | | | | | | | | 0.5 |
| | No.24( " ) | | | | | | | | | | | | | |
| | AO-1 | | | | | | | | | | | | | |
| | AO-9 | | | | | | | | | | | | | |
| Sulfur-containing compound | II-1-2 | 0.5 | | | 0.5 | 1.0 | | | | | 0.5 | | | 0.5 |
| | II-2-4 | | 0.5 | | | | 0.5 | 1.0 | | | | 0.5 | | |
| | II-2-5 | | | 0.5 | | | | | 0.5 | 1.0 | | | 0.5 | |
| | AO-7 | | | | | | | | | | | | | |
| ΔYI | | 16.9 | 17.1 | 16.6 | 16.7 | 16.5 | 16.8 | 16.7 | 16.4 | 16.3 | 16.6 | 16.8 | 16.5 | 16.7 |
| Value of Charpy impact test (Kgf·cm/cm²) | Before thermal ageing | 18.7 | 18.3 | 18.5 | 18.8 | 19.3 | 18.3 | 18.5 | 18.5 | 18.7 | 18.4 | 18.2 | 18.3 | 18.6 |
| | After thermal ageing | 16.1 | 15.8 | 15.9 | 16.3 | 16.7 | 16.1 | 16.3 | 16.2 | 16.4 | 16.0 | 15.7 | 15.8 | 16.1 |
| Value of Charpy * impact test $(J/m^2) \times 10^4$ | Before thermal ageing | 1.83 | 1.79 | 1.81 | 1.84 | 1.89 | 1.79 | 1.81 | 1.81 | 1.83 | 1.80 | 1.78 | 1.79 | 1.82 |
| | After thermal ageing | 1.58 | 1.55 | 1.56 | 1.60 | 1.64 | 1.58 | 1.60 | 1.59 | 1.61 | 1.57 | 1.54 | 1.55 | 1.58 |

/Cont'd......

Table 6 (Cont'd.)

| Example No. | | Examples of the Invention | | | | | Comparative examples | | | | | | | |
|---|---|---|---|---|---|---|---|---|---|---|---|---|---|---|
| | | 14 | 15 | 16 | 17 | 18 | 19 | 20 | 21 | 22 | 23 | 24 | 25 | 26 |
| Phenolic type compound | No.2 (Table 1) | | | | | | 0.5 | | | | | | | |
| | No.3 ( " ) | | | | | | | 0.5 | | | | | | |
| | No.10( " ) | | | | | | | | 0.5 | | | | | |
| | No.12( " ) | 0.5 | 0.5 | | | | | | | 0.5 | | | | |
| | No.24( " ) | | | 0.5 | 0.5 | 0.5 | | | | | 0.5 | | | |
| | AO-1 | | | | | | | | | | | 0.5 | 0.5 | 0.5 |
| | AO-9 | | | | | | | | | | | | | |
| Sulfur-containing compound | II-1-2 | | | 0.5 | | | | | | | | 0.5 | 1.0 | |
| | II-2-4 | 0.5 | | | 0.5 | | | | | | | | | 0.5 |
| | II-2-5 | | 0.5 | | | 0.5 | | | | | | | | |
| | AO-7 | | | | | | 0.5 | 0.5 | 0.5 | 0.5 | 0.5 | | | |
| ΔYI | | 16.9 | 16.6 | 17.0 | 17.2 | 16.8 | 25.4 | 25.2 | 25.4 | 25.3 | 25.5 | 25.0 | 25.3 | 24.9 |
| Value of Charpy impact test $(Kgf \cdot cm/cm^2)$ | Before thermal ageing | 18.3 | 18.4 | 18.5 | 18.2 | 18.3 | 17.3 | 17.4 | 17.2 | 17.3 | 17.6 | 17.4 | 17.6 | 17.4 |
| | After thermal ageing | 15.8 | 15.8 | 15.8 | 15.7 | 15.8 | 11.0 | 11.3 | 11.0 | 11.1 | 11.4 | 11.3 | 11.4 | 11.3 |
| Value of Charpy impact test * $(J/m^2)x10^4$ | Before thermal ageing | 1.79 | 1.80 | 1.81 | 1.78 | 1.79 | 1.70 | 1.71 | 1.69 | 1.70 | 1.72 | 1.71 | 1.72 | 1.71 |
| | After thermal ageing | 1.55 | 1.55 | 1.55 | 1.54 | 1.55 | 1.08 | 1.11 | 1.08 | 1.09 | 1.12 | 1.11 | 1.12 | 1.11 |

/Cont'd.......

Table 6 (Cont'd.)

| Example No. | | Comparative examples | | | | | | | |
|---|---|---|---|---|---|---|---|---|---|
| | | 27 | 28 | 29 | 30 | 31 | 32 | 33 | 34 |
| Phenolic type compound | No.2 (Table 1) | | | | | | | | No addition |
| | No.3 ( " ) | | | | | | | | |
| | No.10( " ) | | | | | | | | |
| | No.12( " ) | | | | | | | | |
| | No.24( " ) | | | | | | | | |
| | AO-1 | 0.5 | 0.5 | 0.5 | | | | | |
| | AO-9 | | | | 0.5 | 0.5 | 0.5 | 0.5 | |
| Sulfur-containing compound | II-1-2 | | | | 0.5 | | | | |
| | II-2-4 | | | | | 0.5 | | | |
| | II-2-5 | 0.5 | 1.0 | | | | 0.5 | | |
| | AO-7 | | | 0.5 | | | | 0.5 | |
| ΔYI | | 25.0 | 25.4 | 25.5 | 25.1 | 25.0 | 25.2 | 25.7 | 33.7 |
| Value of Charpy impact test (Kgf·cm/cm$^2$) | Before thermal ageing | 17.3 | 17.5 | 17.6 | 17.4 | 17.5 | 17.3 | 17.7 | 16.3 |
| | After thermal ageing | 11.0 | 11.3 | 11.4 | 11.3 | 11.4 | 11.1 | 11.5 | 6.4 |
| Value of Charpy * impact test (J/m$^2$)x10$^4$ | Before thermal ageing | 1.70 | 1.72 | 1.72 | 1.71 | 1.72 | 1.70 | 1.73 | 1.60 |
| | After thermal ageing | 1.08 | 1.11 | 1.12 | 1.11 | 1.12 | 1.09 | 1.13 | 0.63 |

* (Charpy impact test values based on the conversion : Charpy (u) kgf.cm/cm$^2$ = 9.8 x 10$^2$ J/m$^2$)

**Claims**

1. A stabilizer for high polymers containing as an effective component a mixture comprising at least one member selected from phenolic type compounds of formula (I),

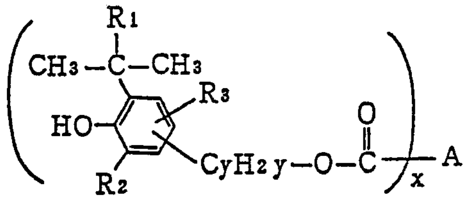

(I)

wherein $R_1$ represents a $C_1$—$C_9$ alkyl group, $R_2$ represents a $C_1$—$C_3$ alkyl group, $R_3$ represents a hydrogen atom or a methyl group, x represents an integer of 2 to 6, y represents an integer of 1 to 10, and A represents a di- to hexahydric carboxylic acid residue, but it may be simply a single bond when x is 2, and at least one member (II) selected from the group consisting of sulfur-containing compounds of formula (II-1),

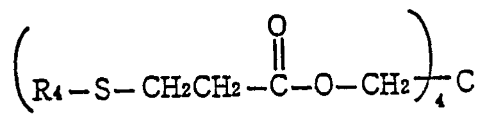

(II-1)

wherein $R_4$ represents a $C_4$—$C_{20}$ alkyl group, and those of formula (II-2),

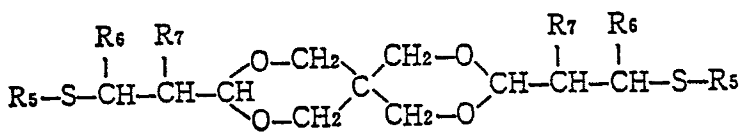

(II-2)

wherein $R_5$ represents a $C_3$—$C_{18}$ alkyl group, and $R_6$ and $R_7$ are selected independently from a hydrogen atom and $C_1$—$C_6$ alkyl groups.

2. A stabilizer according to claim 1 wherein the weight ratio of phenolic type compound (I) to sulfur-containing compound (II) is 1 to 0.5—15, preferably 1 to 1—10, most preferably 1 to 2—6.

3. A stabilizer according to claim 1 or 2 containing phenolic type compound (I) in which A is selected from $C_1$—$C_{18}$ acyclic aliphatic groups, $C_5$—$C_{16}$ alicyclic groups, $C_6$—$C_{10}$ aromatic groups, and aliphatic groups containing an aromatic group (as a side chain or in the main chain) and the number of carbon atoms in the aliphatic portion is 1 to 16.

4. A stabilizer according to claim 1 or 2 containing phenolic type compound (I) in which x is 2 and A is simply a single bond.

5. A stabilizer according to claim 3 containing phenolic type compound (I) selected from bis[2,2 - dimethyl - 3 - (3 - tert - butyl - 4 - hydroxy - 5 - methylphenyl)propyl] adipate, bis[2,2 - dimethyl - 3 - (3 - tert - butyl - 4 - hydroxy - 5 - methylphenyl)propyl] sebacate or bis[3 - (3 - tert - butyl - 4 - hydroxy - 5 - methylphenyl)propyl] sebacate, bis[2 - (3 - tert - butyl - 5 - ethyl - 4 - hydroxyphenyl)ethyl] 1,4 - cyclohexanedicarboxylate, bis[2,2 - dimethyl - 3 - (3 - tert - butyl - 4 - hydroxy - 5 - methylphenyl)propyl] terephthalate, and bis[3 - (3 - tert - butyl - 4 - hydroxy - 5 - methylphenyl)propyl] 8,9 - diphenylhexadecadioate.

6. A stabilizer according to claim 4 containing the phenolic type compound (I) bis[3-(3-tert-butyl-4-hydroxy-5-methylphenyl)propyl]oxalate.

7. A stabilizer according to any of claims 1 to 6 containing sulfur-containing compound (II-I) selected from pentaerythritol tetrakis(3-dodecylthiopropionate), 3,9-bis(2-dodecylthioethyl)-2,4,8,10-tetraoxaspiro-[5.5]undecane, and 3,9-bis(2-octadecylthiopropyl)-2,4,8,10-tetraoxaspiro[5.5]undecane.

8. A high polymer, e.g. a polyolefin and preferably a polypropylene, incorporating a stabilizer according to any preceding claim.

9. A polymer according to claim 8 containing from 0.01 to 5, preferably 0.05 to 1, parts by weight of the stabilizer per 100 parts by weight of resin.

**Patentansprüche**

1. Stabilisator für Hochpolymere, enthaltend als wirksame Komponente eine Mischung aus wenigstens einer Verbindung, ausgewählt aus Phenoltyp-Verbindungen der Formel (I)

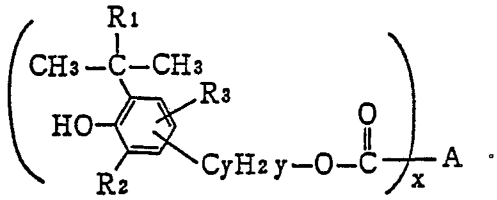

(I)

worin $R_1$ eine $C_1$—$C_9$-Alkylgruppe ist, $R_2$ eine $C_1$—$C_3$-Alkylgruppe ist, $R_3$ ein Wasserstoffatom oder eine Methylgruppe ist, x eine ganze Zahl von 2 bis 6 ist, y eine ganze Zahl von 1 bis 10 ist und A einen 2- bis 6-basischen Carbonsäurerest bedeutet, jedoch einfach eine Einfachbindung sein kann, wenn x für 2 steht, und wenigstens einer Verbindung (II), ausgewählt aus der Gruppe, bestehend aus schwefelenthaltenden Verbindungen der Formel (II-1)

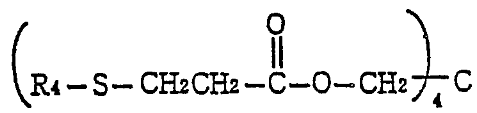

(II-1)

worin $R_4$ eine $C_4$—$C_{20}$-Alkylgruppe ist, und denjenigen der Formel (II-2)

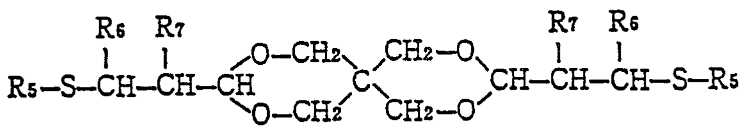

(II-2)

worin $R_5$ eine $C_3$—$C_{18}$-Alkylgruppe ist und $R_6$ und $R_7$ unabhängig voneinander ausgewählt sind aus einem Wasserstoffatom und $C_1$—$C_6$-Alkylgruppen.

2. Stabilisator nach Anspruch 1, wobei das Gewichtsverhältnis der Phenoltyp-Verbindung (I) zu der schwefelenthaltenden Verbindung (II) 1 zu 0,5—15, vorzugsweise 1 zu 1—10 und insbesondere 1 zu 2—6 beträgt.

3. Stabilisator nach Anspruch 1 oder 2, enthaltend eine Phenoltyp-Verbindung (I), worin A ausgewählt ist aus $C_1$—$C_{18}$-azyklischen aliphatischen Gruppen, $C_5$—$C_{16}$-alizyklischen Gruppen, $C_6$—$C_{10}$ aromatischen Gruppen und aliphatischen Gruppen, enthaltend eine aromatische Gruppe (als eine Seitenkette oder in der Hauptkette), wobei die Anzahl der Kohlenstoffatome in dem aliphatischen Teil 1 bis 16 beträgt.

4. Stabilisator nach Anspruch 1 oder 2, enthaltend eine Phenoltyp-Verbindung (I), in welcher x für 2 steht und A einfach eine Einfachbindung ist.

5. Stabilisator nach Anspruch 3, enthaltend eine Phenoltyp-Verbindung (I), ausgewählt aus Bis[2,2 - dimethyl - 3 - (3 - tert. - butyl - 4 - hydroxy - 5 - methylphenyl)propyl - adipat, Bis[2,2 - dimethyl - 3 - (3 - tert. - butyl - 4 - hydroxy - 5 - methylphenyl)propyl] - sebazat oder Bis[3 - (3 - tert. - butyl - 4 - hydroxy - 5 - methylphenyl)propyl]sebazat, Bis[2 - (3 - tert. - butyl - 5 - ethyl - 4 - hydroxyphenyl)-ethyl - 1,4 - cyclohexandicarboxylat, Bis[2,2 - dimethyl - 3 - (3 - tert. - butyl - 4 - hydroxy - 5 - methylphenyl)propyl] - terephthalat und Bis[3 - (3 - tert. - butyl - 4 - hydroxy - 5 - methylphenyl)-propyl] - 8,9 - diphenylhexadecadioat.

6. Stabilisator nach Anspruch 4, enthaltend die Phenoltyp-Verbindung (I) Bis[3-(3-tert.-butyl-4-hydroxy-5-methylphenyl)propyl]-oxalat.

7. Stabilisator nach einem der Anspruch 1 bis 6, enthaltend eine Schwefel enthaltende Verbindung (II-1), ausgewählt aus Pentaerythrittetrakis(3-dodecylthiopropionat), 3,9-Bis(2-dodecylthioethyl)-2,4,8,10-tetraoxaspiro[5,5]-undecan und 3,9-Bis(2-octadecylthiopropyl)-2,4,8,10-tetraoxaspiro[5,5]-undecan.

8. Hochpolymeres, beispielweise ein Polyolefin und beispielsweise ein Polypropylen, das einen Stabilisator gemäß einem der vorhergehenden Ansprüche enthält.

9. Polymeres nach Anspruch 8, enthaltend 0,01 bis 5 und vorzugsweise 0,05 bis 1 Gew.-Teile des Stabilisators pro 100 Gew.-Teile des Harzes.

**Revendications**

1. Agent stabilisant pour hauts polymères, contenant comme composant actif un mélange comprenant au moins un représentant choisi parmi des composés de type phénolique de formule (I)

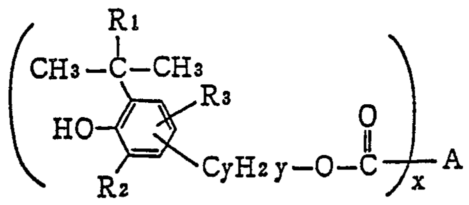

(I)

dans laquelle $R_1$ est un groupe alkyle en $C_1$ à $C_9$, $R_2$ représente un groupe alkyle en $C_1$ à $C_3$, $R_3$ représente un atome d'hydrogène ou un groupe méthyle, x est un nombre entier de 2 à 6, y représente un nombre entier de 1 à 10 et A représente un résidu d'acide carboxylique difonctionnel à hexafonctionnel mais peut ne représenter qu'une liaison simple lorsque x est égal à 2, et au moins un représentant (II) du groupe constitué des composés contenant du soufre de formule (II-l)

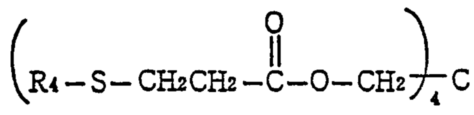

(II-1)

dans laquelle $R_4$ représente un groupe alkyle en $C_4$ à $C_{20}$ et de formule (II-2)

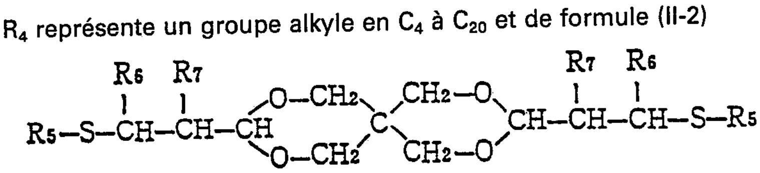

(II-2)

où $R_5$ représente un groupe alkyle en $C_3$ à $C_{18}$ et $R_6$ et $R_7$ sont choisis; indépendamment, entre un atome d'hydrogène et des groupes alkyle en $C_1$ à $C_6$.

2. Agent stabilisant suivant la revendication 1, dans lequel le rapport en poids du composé (I) de type phénolique au composé (II) contenant du soufre est de 1 à 0,5—15, mieux encore de 1 à 1—10 et notamment de 1 à 2—6.

3. Agent stabilisant suivant la revendication 1 ou 2, contenant un composé (I) de type phénolique dans lequel A est choisi entre des groupes aliphatiques acycliques en $C_1$ à $C_{18}$, des groupes alicycliques en $C_5$ à $C_{16}$, des groupes aromatiques en $C_6$ à $C_{10}$ et des groupes aliphatiques contenant un groupe aromatique (comme chaîne latérale ou dans la chaîne principale) et le nombre d'atomes de carbone dans la portion aliphatique va de 1 à 16.

4. Agent stabilisant suivant la revendication 1 ou 2, contenant un composé (I) de type phénolique dans lequel x a la valeur 2 et A ne représente qu'une liaison simple.

5. Agent stabilisant suivant la revendication 3, contenant un composé (I) de type phénolique choisi entre l'adipate de bis[2,2 - diméthyl - 3 - (3 - tertio - butyl - 4 - hydroxy - 5 - méthylphényl)propyle], le sébacate de bis[2,2 - diméthyl - 3 - (3 - tertio - butyl - 4 - hydroxy - 5 - méthylphényl)propyle] ou le sébacate de bis[3 - (3 - tertio - butyl - 4 - hydroxy - 5 - méthylphényl)propyle], le 1,4 - cyclohexanedicarboxylate de bis[2 - (3 - tertio - butyl - 5 - éthyl - 4 - hydroxyphényl)éthyle], le téréphtalate de bis[2,2 - diméthyl - 3 - (3 - tertio - butyl - 4 - hydroxy - 5 - méthylphényl]propyle] et le 8,9 - diphénylhexadécadioate de bis[3 - (3 - tertio - butyl - 4 - hydroxy - 5 - méthylphényl)propyle].

6. Agent stabilisant suivant la revendication 4, contenant comme composé (I) de type phénolique l'oxalate de bis[3 - (3 - tertio - butyl - 4 - hydroxy - 5 - méthylphényl)propyle].

7. Agent stabilisant suivant l'une quelconque des revendications 1 à 6, contenant un composé sulfuré (II-l) choisi entre le tétrakis(3 - dodécylthiopropionate) de pentaérythritol, le 3,9 - bis(2 - dodécylthioéthyl) - 2,4,8,10 - tétraoxaspiro[5.5]undécane et le 3,9 - bis(2 - octadécylthiopropyl) - 2,4,8,10 - tétraoxaspiro[5.5]undécane.

8. Haut polymère, par exemple une polyoléfine et de préférence un polypropylène, renfermant un agent stabilisant suivant l'une quelconque des revendications précédentes.

9. Polymère suivant la revendication 8, contenant 0,01 à 5, de préférence 0,05 à 1, parties en poids d'agent stabilisant pour 100 parties en poids de résine.